## Europäisches Patentamt
## European Patent Office
## Office européen des brevets

(19)

(11) Numéro de publication : **0 004 212**
**B1**

(12) # FASCICULE DE BREVET EUROPÉEN

(45) Date de publication du fascicule du brevet :
**17.06.81**

(51) Int. Cl.³ : **B 62 D 5/06**

(21) Numéro de dépôt : **79400085.1**

(22) Date de dépôt : **08.02.79**

(54) Dispositif de direction assistée d'un véhicule.

(30) Priorité : **23.02.78 FR 7805160**

(43) Date de publication de la demande :
**19.09.79 (Bulletin 79/19)**

(45) Mention de la délivrance du brevet :
**17.06.81 Bulletin 81/24**

(84) Etats contractants désignés :
**DE FR GB IT NL SE**

(56) Documents cités :
**US - A - 3 227 178**

(73) Titulaire : **VALEO**
**64 Avenue de la Grande Armée**
**F-75017 Paris (FR)**

(72) Inventeur : **Dauvergne, Jean Louis René**
**6 allée Maryse Hilsz**
**F-95470 Fosses (FR)**

(74) Mandataire : **Foldès, Georges et al**
**CABINET J. BONNET THIRION 95 Bd. Beaumarchais**
**F-75003 Paris (FR)**

Imprimerie Jouve, 17, rue du Louvre, 75001 Paris, France

## Dispositif de direction assistée d'un véhicule

La présente invention se rapporte à un dispositif de direction assistée d'un véhicule, comportant des moyens pilotes agissant sur des moyens de braquage, lesdits moyens pilotes ayant un élément de transmission en deux parties lesquelles sont prévues avec un jeu angulaire relatif limité permettant un décalage angulaire entre lesdites parties sous l'action desdits moyens pilotes, et des moyens d'assistance qui, en réponse à un tel décalage angulaire, sont admis à agir sur les moyens de braquage dans le même sens que les moyens pilotes. Un tel dispositif est par exemple décrit dans le brevet américain 3.227.178.

L'invention se rapporte notamment à un tel dispositif dans lequel lesdits moyens d'assistance comportent une centrale hydraulique, un vérin hydraulique agissant sur lesdits moyens de braquage et un distributeur hydraulique interposé entre la centrale et le vérin.

L'invention se rapporte plus particulièrement à un distributeur, du type comportant un empilement axial composé d'un premier stator, d'un premier disque rotor solidaire en rotation d'une des deux parties de l'élément de transmission, d'un deuxième disque rotor solidaire en rotation de l'autre partie de l'élément de transmission, et d'un deuxième stator, le premier stator étant alimenté par ladite centrale hydraulique, le premier disque rotor ayant une série de passages, le deuxième disque rotor ayant deux séries de passages, et le deuxième stator alimentant ledit vérin hydraulique.

Les dispositifs connus de ce genre, ont généralement une construction complexe qui nécessite un piston d'équilibrage et des moyens élastiques de rattrapage de jeu suivant les interfaces des stators et des rotors, ce qui conduit notamment à prévoir le stator associé à la centrale hydraulique avec un montage coulissant suivant une direction axiale. Malgré un tel agencement de la construction, les disques rotors sont épais et mal équilibrés et l'on constate des difficultés de fonctionnement. De plus, les rotors doivent recevoir des usinages différents suivant leurs deux faces, ce qui complique la fabrication.

La présente invention a pour objet un dispositif de direction assistée d'un véhicule, qui est exempt de ces inconvénients dont la construction est extrêmement simple et qui présente un fonctionnement irréprochable et parfaitement équilibré.

Suivant l'invention, un dispositif de direction assistée d'un véhicule, du type sus-indiqué, est caractérisé en ce que les passages des deux disques rotors sont des trous cylindriques s'étendant d'une face à l'autre du disque, et en ce que des moyens de gorges annulaires sont ménagés dans les faces des stators adjacentes auxdits disques rotors et s'étendent en regard desdits trous cylindriques.

Par trou cylindrique, il convient d'entendre un trou qui est défini par une surface cylindrique et dont la section perpendiculaire à l'axe du distributeur est circulaire ou autre, et reste constante d'une extrémité à l'autre dudit trou.

Grâce à cette disposition, les disques rotors peuvent être fabriqués commodément à l'emporte-pièce, par exemple par découpe à la presse à partir d'un flan plat en tôle, ce qui permet de réaliser des grandes séries de fabrication dans des conditions économiques, et sans reprise d'usinage.

Suivant une autre caractéristique, la série de passages du premier disque rotor et les deux séries de passages du deuxième disque rotor sont toutes les trois des séries circulaires suivant trois rayons moyens différents. De préférence le rayon moyen relatif au premier disque rotor est compris entre ceux qui sont relatifs au deuxième disque rotor.

Cet agencement permet de bien équilibrer axialement chacun des disques rotors séparément en sorte qu'aucune force axiale notable ne tende à la déplacer dans un sens ou dans l'autre, et ceci à tout moment, aussi bien lorsque l'assistance est active que lorsqu'elle est inactive.

A cet effet, il suffit de respecter les conditions suivantes, ce qui peut être réalisé facilement :

1) La somme des aires, suivant des sections perpendiculaires à l'axe du distributeur, des passages d'une des séries de passages du deuxième disque rotor est égale à la somme des aires, suivant des sections perpendiculaires à l'axe du distributeur, des passages de l'autre série de passages du deuxième disque rotor.

2) La gorge annulaire du premier stator a une aire suivant une section annulaire perpendiculaire à l'axe du distributeur, qui est égale à la somme des aires suivant une section perpendiculaire à l'axe du distributeur, des trous cylindriques d'une des séries de trous cylindriques du deuxième disque rotor, elle-même égale à la somme des aires suivant une section perpendiculaire à l'axe du distributeur des trous cylindriques de l'autre série de trous cylindriques du deuxième disque rotor.

3) Les deux gorges annulaires du deuxième stator ont une même aire suivant une section annulaire perpendiculaire à l'axe du distributeur.

4) La somme des aires, suivant une section perpendiculaire à l'axe du distributeur, des trous cylindriques du premier disque rotor est égale à l'aire suivant une section annulaire perpendiculaire à l'axe du distributeur de chacune des deux gorges annulaires du deuxième stator.

L'ensemble de ces conditions permet d'obtenir l'équilibrage dans tous les cas de fonctionnement. Lorsque l'assistance est active, la haute pression de la centrale répond à la condition souhaitable d'être égale à celle développée dans l'une ou l'autre chambre du vérin, tandis que lorsque l'assistance est inactive, la basse pression résiduelle de la centrale répond à la condition souhaitable d'être égale à la somme des basses pressions résiduelles dans les deux chambres du vérin.

Du fait de l'équilibrage des disques rotors, il n'est pas nécessaire ni de prévoir un piston d'équilibrage, ni d'exercer une force élastique axiale pour maintenir les disques rotors accollés l'un avec l'autre et, suivant une autre caractéristique de l'invention, l'empilement axial des deux disques rotors entre les deux stators dont la distance est constante de préférence par l'intermédiaire d'une entretoise est réalisé à frottement doux, avec une tolérance prédéterminée, par exemple de l'ordre du centième de millimètre.

Une telle construction qui est considérablement simplifiée puisqu'elle se trouve exempte de joints et de moyens de rattrapage de jeu donne d'excellents résultats. En outre les disques rotors peuvent être de faible épaisseur, ce qui permet, pour une distance donnée entre les stators, d'avoir un disque rotor très mince et l'autre plus épais pour assurer une liaison rigide entre les deux parties de la transmission en cas de défaillance de l'assistance.

Le dispositif suivant l'invention comporte avantageusement des moyens pour améliorer les conditions d'équilibrage des pressions, ce qui est particulièrement utile lorsque la pression de la centrale est élevée.

A cet effet, des trous auxiliaires peuvent être ménagés dans les rotors et sont soit indépendants des passages hydrauliques, soit constitués par les passages hydrauliques eux-mêmes agrandis à cet effet.

En vue d'améliorer les conditions d'équilibrage des pressions, on peut également dédoubler les fonctions des divers stators et rotors. Chaque stator comporte alors trois gorges et chaque rotor présente trois séries de passages hydrauliques.

Des formes d'exécution sont ci-après décrites, à titre d'exemple, en référence aux dessins annexés dans lesquels :

La figure 1 est une vue schématique en perspective d'un dispositif de direction assistée pour véhicule automobile, suivant l'invention ;

La figure 2 est une vue à plus grande échelle de ce dispositif en coupe longitudinale ;

La figure 3 est une vue schématique, en perspective éclatée, du dispositif montrant les deux stators et les deux rotors ainsi que, partiellement, la colonne de direction ;

La figure 4 est une vue de la face du premier stator adjacente au premier rotor ;

La figure 5 est une vue en élévation du premier rotor ;

La figure 6 est une vue en élévation du deuxième rotor ;

La figure 7 est une vue de la face du deuxième stator adjacente au deuxième rotor ;

La figure 8 illustre l'interface du premier stator de la figure 4 et du premier rotor de la figure 5 ;

La figure 9 illustre l'interface du premier rotor de la figure 5 et du deuxième rotor de la figure 6 ;

La figure 10 illustre l'interface du deuxième rotor de la figure 6 et du deuxième stator de la figure 7 ;

Les figures 11 et 12, sont des vues analogues aux figures 5 et 6 mais concernent une variante dans laquelle les rotors ont des trous d'équilibrage, ces trous d'équilibrage étant distincts des passages hydrauliques ;

Les figures 13 et 14 sont des vues analogues aux figures 11 et 12 et concernent une autre variante dans laquelle les trous d'équilibrage sont constitués par les passages hydrauliques eux-mêmes agrandis à cet effet ;

La figure 15 est une vue analogue à la figure 3 mais concerne une autre variante encore, dans laquelle les divers stators et rotors ont des fonctions dédoublées pour améliorer l'équilibrage des pressions ;

Les figures 16 et 17 montrent en élévation les deux rotors du dispositif de la figure 15 ;

La figure 18 montre en élévation ces deux rotors superposés pour illustrer le mode de communication des passages hydrauliques.

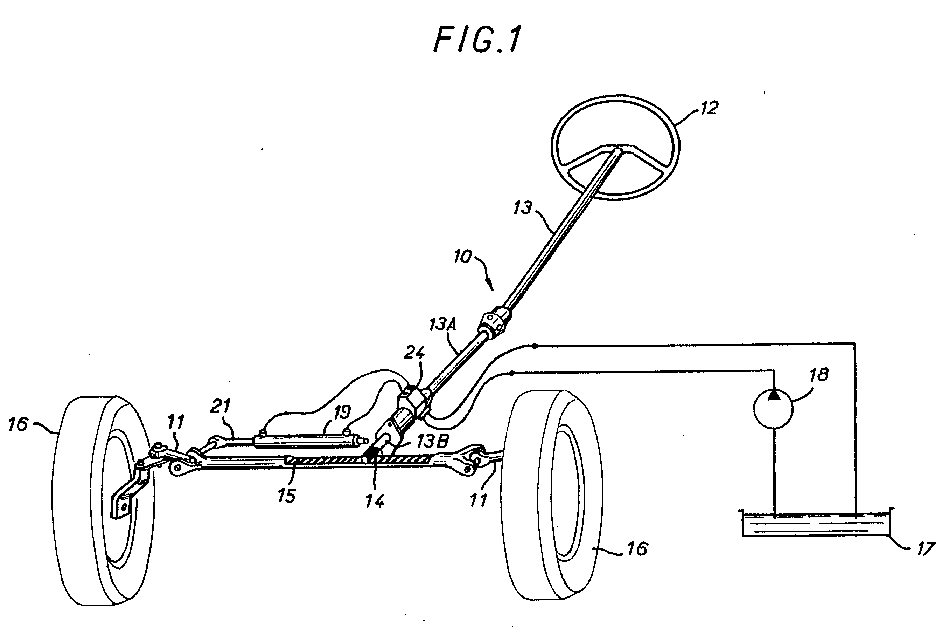

Dans le mode de réalisation représenté aux figures 1 à 10, un dispositif de direction assistée suivant l'invention est appliqué à titre d'exemple à un véhicule automobile.

Ce dispositif comporte (figure 1) des moyens pilotes 10 agissant sur des moyens des braquage tels que des biellettes 11. Les moyens pilotes 10 comportent un volant 12 et une colonne de direction 13. Celle-ci comporte deux parties alignées 13A et 13B prévues avec un jeu relatif limité permettant un décalage angulaire entre les parties 13A et 13B sous l'action des moyens pilotes 10. La partie 13A est solidaire du volant 12, tandis que la partie 13B est solidaire d'un pignon 14 qui engrène avec une crémaillère 15. Celle-ci contribue à l'orientation de roues directrices 16 du véhicule par l'intermédiaire des biellettes de braquage 11.

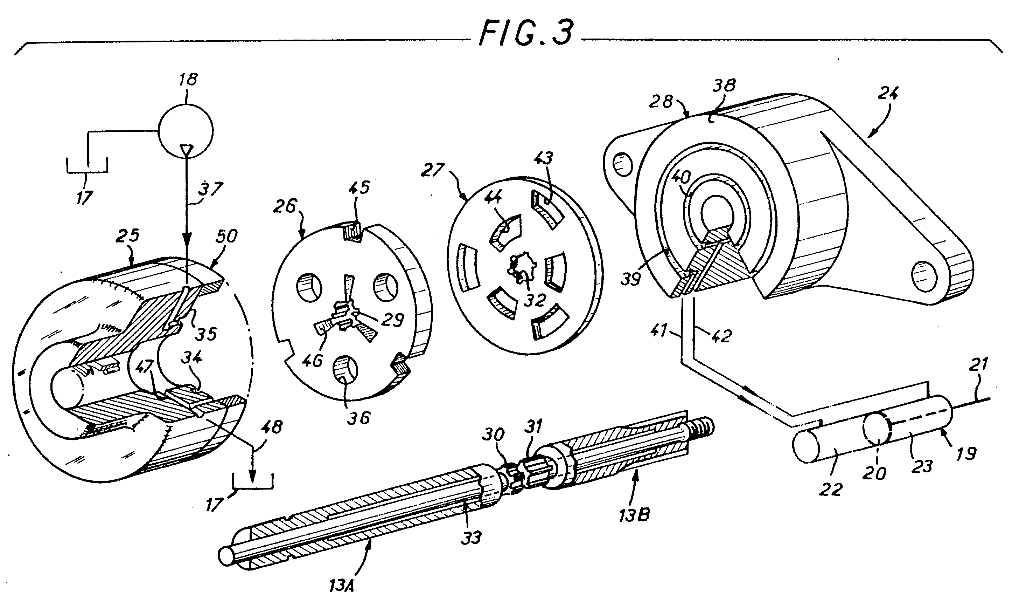

Une centrale hydraulique d'assistance 17-18 comporte un réservoir 17 et une pompe 18 puisant dans ce réservoir 17. Un vérin hydraulique 19 a un piston 20 (figure 3) dont la tige 21 agit sur la crémaillère 15. Le piston 20 définit dans le vérin 19 deux chambres 22 et 23.

Un distributeur hydraulique 24 est interposé entre la pompe 18 et le vérin 19 et est sensible au décalage angulaire des deux parties 13A et 13B pour faire agir le vérin 19 sur les biellettes de braquage 11 dans le même sens que les moyens pilotes.

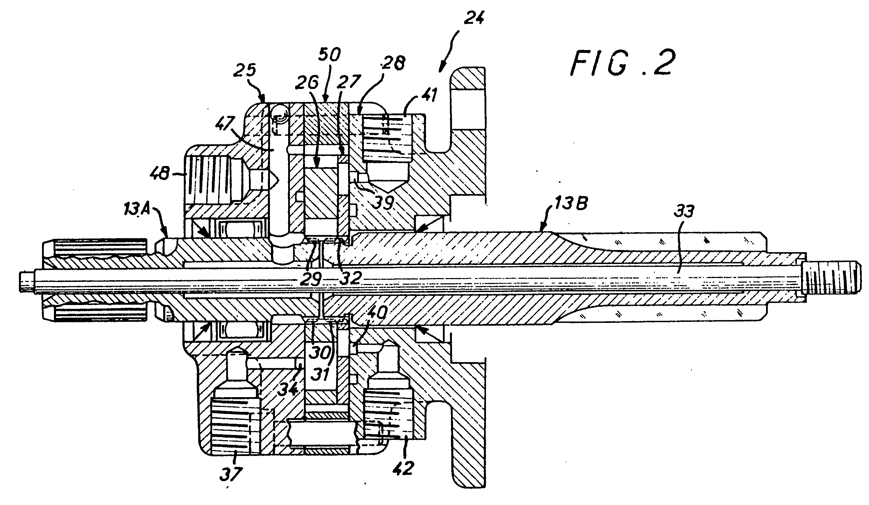

Le distributeur 24 comporte un empilement axial (figures 2 et 3) composé : d'un premier stator 25 ; d'un premier disque rotor 26 solidaire en rotation de la partie 13A de la colonne de direction ; d'un deuxième disque rotor 27 solidaire en rotation de la partie 13B de la colonne de direction ; et d'un deuxième stator 28.

Le premier disque 26 est plus épais que le disque 27. Il présente un perçage central cannelé 29 engagé sans jeu angulaire sur une portée cannelée 30 de la partie 13A et engagé avec un jeu angulaire sur une portée cannelée 31 de la partie 13B. L'autre disque 27 a un perçage central cannelé 32 engagé sans jeu sur les cannelures 31 de la partie 13B.

C'est le jeu entre les cannelures 29 et 31 qui définit le jeu angulaire relatif limité précité. Ce jeu est de quelques degrés de part et d'autre d'une position moyenne de repos qui tend à être rappelée et maintenue par une barre de torsion 33 accouplant élastiquement les parties 13A et 13B.

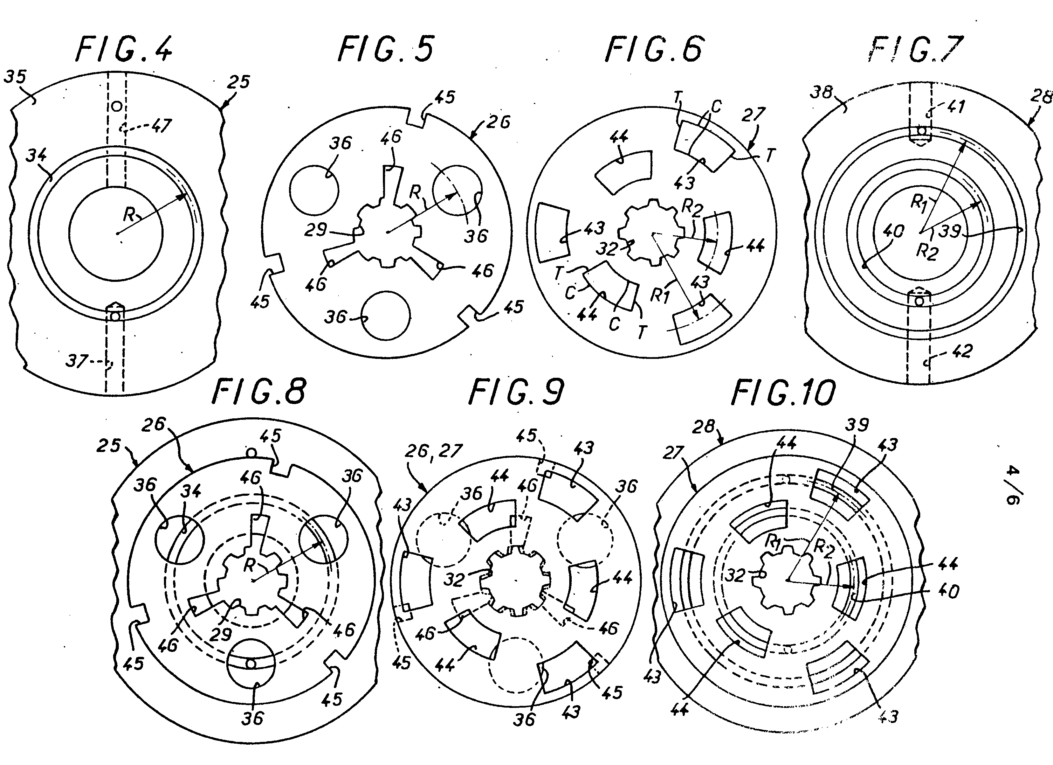

Une gorge annulaire 34 (figures 2, 3 et 4) est ménagée sur la face 35 du stator 25 adjacente au disque 26. Ce disque 26 (figure 5) comporte une série circulaire de trous cylindriques 36 de section circulaire (trois dans l'exemple représenté) répartis suivant le même rayon moyen R que la gorge 34 de façon à la chevaucher (figure 8) et s'étendant d'une face à l'autre du disque 26. Cette gorge annulaire 34 (figure 3) est reliée à la pompe 18 par un conduit 37.

La face 38 du deuxième stator 28 qui est adjacente au deuxième disque 27 (figures 3 et 7) comporte deux gorges annulaires concentriques 39 et 40 qui sont respectivement reliées par des conduits 41 et 42 aux deux chambres 22 et 23 du vérin 19. Le deuxième disque 27 (figure 6) présente deux séries circulaires de trous cylindriques 43 et 44 respectivement. Les trous cylindriques 43 et 44 ont une section sensiblement rectangulaire avec deux côtés radiaux rectilignes T et deux côtés circonférentiels curvilignes C (figure 6).

Par trous cylindriques 36, 43 et 44, il convient d'entendre des trous qui sont définis par une surface cylindrique et dont la section perpendiculaire à l'axe du distributeur est circulaire, rectangulaire ou autre, et reste constante d'une extrémité à l'autre du trou, c'est-à-dire d'une face à l'autre du disque rotor correspondant.

Les trous cylindriques 43 de la première série (trois dans l'exemple représenté) sont répartis suivant le même rayon moyen R1 que la gorge 39 de façon à la chevaucher (figure 8) et s'étendent d'une face à l'autre du disque 27, tandis que les trous cylindriques 44 de la deuxième série (trois dans l'exemple représenté) sont répartis suivant le même rayon moyen R2 que la gorge 40 de façon à la chevaucher (figure 8) et s'étendent d'une face à l'autre du disque 27.

Les divers trous cylindriques 36, 43 et 44 sont parallèles à l'axe du dispositif.

Le rayon moyen R de la série de passages 36 du premier disque rotor 26, c'est-à-dire le rayon moyen R de la gorge annulaire 34 du premier stator 25, a une valeur intermédiaire comprise entre celles des rayons moyens R1 et R2 des deux séries de passages, respectivement 43 et 44, du deuxième disque rotor 27, c'est-à-dire des rayons moyens R1 et R2 des gorges 39 et 40 du deuxième stator 28.

Le premier disque 26 (figure 5) comporte une série d'encoches périphériques externes 45 et une série d'encoches périphériques internes 46. Ces encoches 45 et 46 sont destinées à permettre le retour au réservoir 17 (figure 3) via un passage 47 du stator 25 et un conduit 48.

Chacun des disques 26 et 27 est réalisé à l'emporte-pièce par exemple par découpage à la presse avec les divers passages, encoches et perçages à partir de flans plats, en tôle métallique ce qui permet une réalisation particulièrement simple. Ces disques 26 et 27 sont logés, à frottement doux, suivant les trois interfaces 35-26, 26-27, 27-38 entre les stators 25 et 28. La distance axiale entre ces stators 25 et 28 est maintenue constante grâce à une entretoise 50, ce qui permet une construction très simple. La tolérance pour le frottement doux est de l'ordre de quelques centièmes de millimètre.

La disposition des gorges 34-39 et 40 et des passages 36, 43 et 44 sur trois rayons différents permet ainsi d'équilibrer facilement chacun des disques 26 et 27 en toutes circonstances. Chaque disque 26 ou 27 n'est jamais soumis à une force notable qui tendrait à le solliciter dans un sens ou dans l'autre, ce qui permet une excellente adaptation à un fonctionnement à frottement doux suivant les interfaces 25-26, 26-27 et 27-28.

Il suffit de respecter les conditions suivantes, ce qui peut être réalisé facilement :

1) La somme des aires, suivant des sections perpendiculaires à l'axe du distributeur, des trous cylindriques 43 est égale à la somme des aires suivant des sections perpendiculaires à l'axe du distributeur des trous cylindriques 44 du deuxième disque rotor 27.

2) La gorge annulaire 34 du premier stator 25 a une aire suivant une section annulaire perpendiculaire à l'axe du distributeur, qui est égale à la somme des aires suivant une section perpendiculaire à l'axe du distributeur des trous cylindriques 43, elle-même égale à la somme des aires suivant une section perpendiculaire à l'axe du distributeur des trous cylindriques 44 du deuxième disque rotor 27.

3) Les deux gorges annulaires 39 et 40 du deuxième stator 28 ont une même aire suivant une section annulaire perpendiculaire à l'axe du distributeur.

4) La somme des aires suivant une section perpendiculaire à l'axe du distributeur des trous cylindriques 36 du premier disque rotor 26 est égale à l'aire suivant une section annulaire perpendiculaire à l'axe du distributeur de chacune des deux gorges annulaires 39 et 40 du deuxième stator 28.

L'ensemble de ces conditions permet d'obtenir l'équilibrage dans tous les cas de fonctionnement. Lorsque l'assistance est active, la haute pression de la centrale 17-18 répond à la condition souhaitable d'être égale à celle développée dans l'une ou l'autre chambre 22 et 23 du vérin 19, tandis que lorsque l'assistance est inactive, la basse pression résiduelle de la centrale 17-18 répond à la condition souhaitable d'être égale à la somme des basses pressions résiduelles dans les deux chambres 22 et 23 du vérin 19.

En l'absence d'action du conducteur sur le volant 12, les parties 13A et 13B sont maintenues en position de repos par la barre de torsion 33. On voit aux figures 8, 9 et 10 comment se présentent alors les divers passages et gorges les uns par rapport aux autres suivant les trois interfaces. Le débit de la pompe 18 est admis par le conduit 37 dans la gorge 34 (figure 8), accède aux passages 36, quelle que soit la position angulaire du disque rotor 26, de là, (figure 9) aux passages 43 et 44 qui, eux-mêmes, sont en liaison avec les encoches 45 et 46 de retour au réservoir 18 par le passage 47 et le conduit 48. La pression de la pompe est donc sans effet dans les deux chambres 22 et 23 du vérin 19. L'installation fonctionne ainsi à centre ouvert et le vérin 19 n'est pas sollicité.

Lorsque le conducteur exerce une action sur le volant 12 pour braquer les roues 16, les parties 13A et 13B sont décalées l'une par rapport à l'autre dans un sens déterminé par cette action sur le volant 12 et la position angulaire relative des deux disques 26 et 27 passe de la position de repos de la figure 9 à une position où les passages 43 présentent un recouvrement accentué avec les passages 36 et un découvrement accentué avec les encoches 45, tandis que les passages 44 présentent un découvrement accentué avec les passages 36 et présentent un recouvrement accentué avec les encoches 46.

Dans ces conditions le débit de la pompe passant de la gorge 34 dans les passages 36 est admis préférentiellement par les passages 43 dans la gorge 39 et, de là, dans la chambre 22 du vérin 19. Celle-ci augmente de volume en poussant la tige 21 dans le sens désiré du braquage. La chambre 23 du vérin 19 diminue le volume et son huile est chassée par le conduit 42 dans la gorge 40, et dans les passages 44 qui communiquent avec les encoches 46 de retour au réservoir 17 par l'intermédiaire du passage 47 et du conduit 48.

Lorsque le conducteur exerce une action sur le volant 12 dans l'autre sens, le fonctionnement est le même que celui qui vient d'être décrit mais le disque 27 prend une position angulaire par rapport au disque 26 qui est décalé dans l'autre sens par rapport à la position de repos de la figure 9. Le débit de la pompe passe via 34, 36, 44, 40 et 42 dans le chambre 23 du vérin 19 et le retour de l'huile de la chambre 22 au réservoir 18 s'effectue via 41, 39, 43, 45, 47 et 48.

En cas de défaillance des moyens d'assistance, l'action sur le volant 12 pour braquer a pour effet d'absorber le jeu angulaire relatif limité entre les parties 13A et 13B au sein des dentures 29, 30, 31, 32, en surmontant la résistance élastique opposée par la barre de torsion 33, et ensuite, grâce à la liaison rigide réalisée par le disque épais 26 qui chevauche les dentures 30 et 31 d'entraîner en rotation la partie 13B avec la partie 13A, ce qui assure le braquage.

On appréciera plus particulièrement la construction simple et efficace avec un fonctionnement équilibré du dispositif suivant l'invention.

Il y a lieu de noter que les trous cylindriques 36, 43, 44 peuvent avoir des sections de toutes formes appropriées.

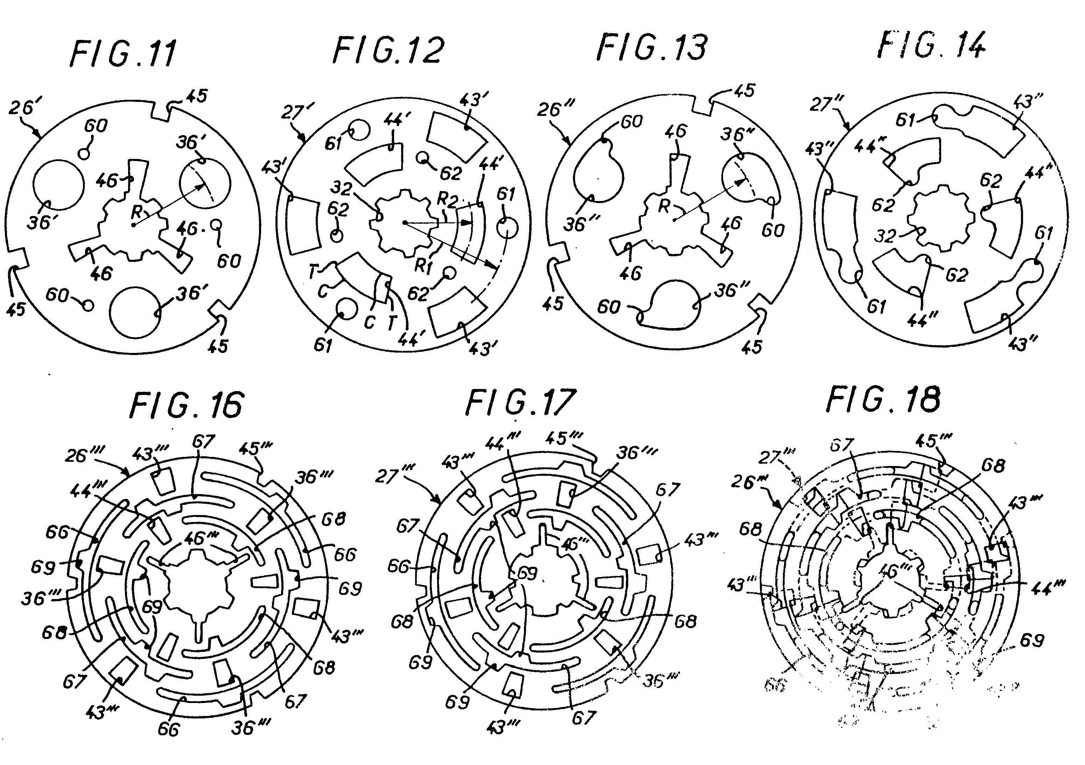

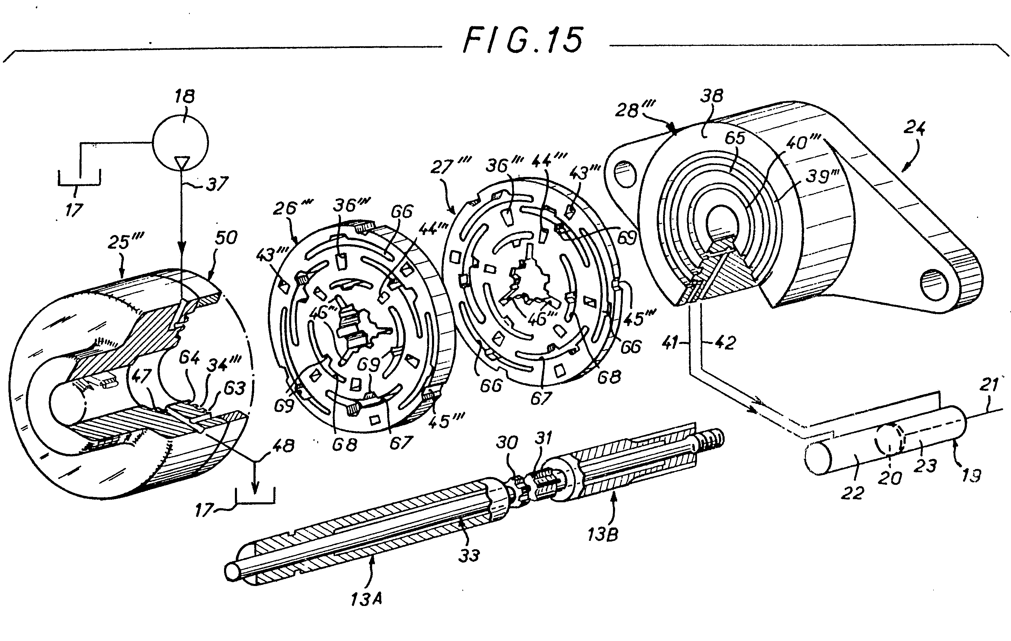

En variante (figures 11 et 12) la disposition est analogue à celle qui a été décrite en référence aux figures 1 à 10 mais les rotors désignés par 26' et 27' comportent, en plus des passages hydrauliques 36', 43', 44', des trous auxiliaires d'équilibrage 60, 61 et 62, qui sont distincts et indépendants des passages 36', 43' et 44'.

Ces trous auxiliaires 60, 61 et 62 ont pour effet d'améliorer les conditions d'équilibrage des pressions ce qui est particulièrement utile lorsque la pression de la centrale 18 est élevée.

Dans une autre variante (figures 13 et 14), la disposition est analogue à celle qui vient d'être décrite en référence aux figures 11 et 12 et les rotors désignés par 26" et 27" ont également des trous auxiliaires d'équilibrage, mais ceux-ci, que l'on reconnaît en 60, 61 et 62 sont constitués par les passages hydrauliques eux-mêmes 36", 43" et 44" agrandis à cet effet.

. Comme précédemment on obtient une amélioration des conditions d'équilibrage.

. Dans une autre variante encore (figures 15 à 18) on prévoit également d'améliorer les conditions d'équilibrage des pressions mais en dédoublant les fonctions des divers stators et rotors désignés par 25''', 26''', 27''' et 28''', ce qui introduit une symétrie favorable à l'équilibrage des pressions. Le premier stator 25''' est non seulement alimenté par la centrale hydraulique 18 mais alimente également le vérin hydraulique 19. Ainsi le premier stator 25''' a non seulement la gorge 34''' mais également deux autres gorges 63 et 64 et a ainsi trois gorges concentriques 63, 34''' et 64.

Le deuxième stator 28''' alimente non seulement le vérin 19 mais également est alimenté par la centrale hydraulique 18. Le deuxième stator 28''' a ainsi non seulement les gorges 39''' et 40''' mais également une troisième gorge 65, les trois gorges 39''', 65 et 40''' sont concentriques et disposées suivant les mêmes rayons que les gorges 63, 34''' et 64.

Le premier rotor 26''' a non seulement la série de passages 36''' mais également les deux séries de passages 43''' et 44''' de l'autre disque et il a ainsi une double fonction.

Il en est de même du deuxième rotor 27''' qui a non seulement les séries de passages 43''' et 44''' mais également la série de passages 36''' du premier rotor. Chaque rotor 26''' et 27''' présente ainsi trois séries de passages hydrauliques 43''', 36''' et 44''' qui s'étendent suivant les mêmes rayons moyens que les gorges 63, 34''' et 64 et les gorges 39''', 65, 40'''.

Les passages de chacune des trois séries de passages hydrauliques 43''', 36''', 44''' de chaque disque rotor 26''' ou 27''' sont alternés avec des fentes 66, 67 et 68 ayant des parties élargies 69 qui coopèrent avec les passages de l'autre rotor pour améliorer les conditions d'équilibrage de pression. Les fentes 66 font communiquer en permanence les gorges 63 et 39'''. Les fentes 67 font communiquer en permanence les gorges 34''' et 65. Et les fentes 68 font communiquer en permanence les gorges 64 et 40'''.

On appréciera que chacun des deux disques rotors 26''' et 27''' a des moyens de retour au réservoir 17 sous la forme des encoches 45''' et 46''' ménagées dans ses périphéries externe et interne.

Le fonctionnement du dispositif représenté aux figures 15 à 18 est analogue à celui qui a été décrit en référence aux figures 1 à 10 mais les divers organes ont un dédoublement des fonctions qui introduit une symétrie améliorant les conditions d'équilibrage des pressions.

On appréciera également que les deux disques 26'''' et 27'''' représentés respectivement aux figures 16 et 17 sont sensiblement les mêmes ce qui permet d'améliorer également les conditions de standardisation.

**Revendications**

1. Dispositif de direction assistée d'un véhicule, comportant des moyens pilotes (10) agissant sur des moyens de braquage (11), lesdits moyens pilotes ayant un élément de transmission en deux parties (13A, 13B), lesquelles sont prévues avec un jeu angulaire relatif limité permettant un décalage angulaire entre lesdites parties sous l'action desdits moyens pilotes, et des moyens d'assistance qui, en réponse à un tel décalage angulaire, sont admis à agir sur les moyens de braquage dans le même sens que les moyens pilotes, dispositif dans lequel lesdits moyens d'assistance comportent une centrale hydraulique (17, 18), un vérin hydraulique (19) agissant sur lesdits moyens de braquage et un distributeur hydraulique (24) interposé entre la centrale et le vérin, ledit distributeur comportant un empilement axial composé d'un premier stator (25), d'un premier disque rotor (26) solidaire en rotation d'une des deux parties de l'élément de transmission, d'un deuxième disque rotor (27) solidaire en rotation de l'autre partie de l'élément de transmission, et d'un deuxième stator (28), le premier stator étant alimenté par ladite centrale hydraulique, le premier disque rotor ayant une série de passages (36), le deuxième disque rotor ayant deux séries de passages, et le deuxième stator alimentant ledit vérin hydraulique (19), dispositif caractérisé en ce que les passages (36, 43, 44) des deux disques rotors (26, 27) sont des trous cylindriques s'étendant d'une face à l'autre du disque et en ce que des moyens de gorges annulaires (34, 39, 40) sont ménagés dans les faces (35, 38) des stators (25, 28) adjacentes auxdits disques rotors (26, 27) et s'étendent en regard desdits trous cylindriques (36, 43, 44).

2. Dispositif suivant la revendication 1, caractérisé en ce que la série de passages (36) du premier disque rotor (26) et les deux séries de passages (43, 44) du deuxième disque rotor (27) sont toutes les trois des séries circulaires suivant trois rayons moyens différents (R, R1, R2).

3. Dispositif suivant la revendication 1 ou la revendication 2, caractérisé en ce qu'une gorge annulaire (34) est ménagée dans la face (35) du premier stator (25) adjacent au premier disque rotor (26), est disposée en regard de la série de trous cylindriques (36) du premier disque rotor (26) et est reliée à une pompe (18) de la centrale hydraulique (17, 18), et en ce que deux gorges annulaires concentriques (39, 40) sont ménagées dans la face (38) du deuxième stator (28) adjacente au deuxième disque rotor (27), sont disposées respectivement en regard des deux séries de trous cylindriques (43, 44) du deuxième disque rotor (27) et sont respectivement reliées à deux chambres opposées (22, 23) du vérin hydraulique (19).

4. Dispositif suivant l'une quelconque des revendications 1 à 3, caractérisé en ce que la série circulaire de passages (36) du premier disque rotor (26) s'étend suivant un rayon moyen intermédiaire (R) compris entre les rayons moyens (R1, R2) suivant lesquels s'étendent les deux séries circulaires de passages (43, 44) du deuxième disque rotor (27).

5. Dispositif suivant l'une quelconque des revendications 1 à 4, caractérisé en ce que chaque gorge annulaire (34, 39, 40) ménagée dans une face (35, 38) d'un stator (25, 28) adjacente à un disque rotor (26, 27) s'étend suivant le même rayon moyen (R, R1, R2) que celui avec lequel s'étend la série circulaire de passages dudit disque rotor, disposée en regard de ladite gorge.

6. Dispositif suivant l'une quelconque des revendications précédentes, caractérisé en ce que la somme des aires, suivant des sections perpendiculaires à l'axe du distributeur, des passages d'une des séries de passages du deuxième disque rotor (27) est égale à la somme des aires, suivant des sections perpendiculaires à l'axe du distributeur des passages de l'autre série de passages du deuxième disque rotor.

7. Dispositif suivant l'une quelconque des revendications précédentes, caractérisé en ce que la gorge annulaire (34) du premier stator (25) a une aire, suivant une section annulaire perpendiculaire à l'axe du distributeur (24), qui est égale à la somme des aires suivant une section perpendiculaire à l'axe du distributeur, des trous cylindriques d'une des séries de trous cylindriques (43) du deuxième disque rotor (27), elle-même égale à la somme des aires, suivant une section perpendiculaire à l'axe du distributeur, des trous cylindriques de l'autre série de trous cylindriques (44) du deuxième disque rotor (27).

8. Dispositif suivant l'une quelconque des revendications précédentes, caractérisé en ce que les deux gorges annulaires (39, 40) du deuxième stator (28) ont une même aire suivant une section perpendiculaire à l'axe du distributeur (24).

9. Dispositif suivant la revendication 8, caractérisé en ce que la somme des aires, suivant une section perpendiculaire à l'axe du distributeur (24) des trous cylindriques (36) du premier disque rotor (26) est égale à l'aire, suivant une section annulaire perpendiculaire à l'axe du distributeur (24) de chacune des deux gorges annulaires (39, 40) du deuxième stator (28).

10. Dispositif suivant l'une quelconque des revendications précédentes, caractérisé en ce que les passages (36) du premier disque rotor (26) sont des trous cylindriques de section circulaire.

11. Dispositif suivant l'une quelconque des revendications précédentes, caractérisé en ce que les passages (43, 44) du deuxième disque rotor (27) sont des trous cylindriques de section sensiblement rectangulaire avec deux côtés radiaux rectilignes (T) et deux côtés circonférentiels curvilignes (C).

12. Dispositif suivant l'une quelconque des revendications précédentes, caractérisé en ce que le premier disque rotor (26) comporte des moyens de retour à un réservoir (17) de la centrale hydraulique (17, 18) sous forme d'encoches (45, 46) ménagées dans ses périphéries externe et interne.

13. Dispositif suivant l'une quelconque des revendications précédentes, caractérisé en ce que les deux stators (25, 28) sont axialement fixes l'un par rapport à l'autre et en ce que les interfaces entre les premiers stators (25) et rotor (26) entre les deux rotors (26, 27), et entre les deuxièmes rotor (27) et stator (28) sont à frottement doux.

14. Dispositif suivant la revendication 13, caractérisé en ce que la distance axiale entre les deux stators est maintenue fixe grâce à une entretoise (50).

15. Dispositif suivant l'une quelconque des revendications précédentes, caractérisé en ce que chacun des deux disques rotors (26, 27) est réalisé à l'emporte-pièce à partir d'un flan de tôle plat.

16. Dispositif suivant l'une quelconque des revendications précédentes, caractérisé par des moyens d'amélioration de l'équilibrage des pressions consistant en des trous auxiliaires (60, 61, 62) ménagés dans les rotors (26', 27').

17. Dispositif suivant la revendication 16, caractérisé en ce que lesdits trous d'équilibrage (60, 61, 62) sont indépendants des passages hydrauliques (36', 43', 44') (figs 11 et 12).

18. Dispositif suivant la revendication 16, caractérisé en ce que lesdits trous d'équilibrage (60, 61, 62) sont constitués par les passages hydrauliques (36", 43", 44") eux-mêmes agrandis à cet effet (figs 13 et 14).

19. Dispositif suivant la revendication 1, caractérisé en ce que le premier stator (25''') est non seulement alimenté par la centrale hydraulique (17, 18) mais alimente également le vérin hydraulique (19), tandis que le deuxième stator (28) alimente non seulement le vérin hydraulique (19) mais est également alimenté par la centrale hydraulique (17, 18), les moyens de gorges de chacun des stators (25''', 28''') comportant trois gorges concentriques (63, 34''', 64, 39''', 65, 40'''), le premier rotor (26' ) ayant non seulement une série de passages hydrauliques (36''') mais également deux autres séries de passages hydrauliques (43''', 44'''), le deuxième rotor (27''') ayant non seulement deux séries de passages hydrauliques (43''', 44''') mais également une troisième série de passages hydrauliques (36'''), chaque rotor ayant ainsi trois séries de passages hydrauliques s'étendant respectivement suivant les mêmes rayons moyens que les trois gorges de chacun des stators, de façon à obtenir un dédoublement symétrique qui améliore les conditions d'equilibrage des pressions (figs 15 à 18).

20. Dispositif suivant la revendication 19, caractérisé en ce que les passages hydrauliques de chacune des trois séries de passages hydrauliques de chaque rotor sont alternés avec des fentes (66, 67, 68) ayant des parties élargies (69) qui coopèrent avec les passages hydrauliques de l'autre rotor pour les besoins de l'équilibrage (figs 15 à 18).

21. Dispositif suivant la revendication 19 ou la revendication 20, caractérisé en ce que chacun des deux disques rotors a des moyens de retour sous forme d'encoches ménagées dans ses périphéries externe et interne (45''', 46''') (figs 15 à 18).

**Claims**

1. An assisted steering arrangement for a vehicle, comprising control means (10) acting on steering means (11), which control means have a transmission element consisting of two parts (13A, 13B) which are disposed with limited relative angular play permitting angular offsetting of the said parts through the action to the said control means, and further comprising assistance means which in response to this angular offsetting are caused to act on the steering means in the same direction as the control means, in which arrangement the said assistance means comprise a hydraulic central station (17, 18), a hydraulic jack (19) acting on the said steering means and a hydraulic distributor (24) interposed between the central station and the jack and consisting of an axial stack comprising a first stator (25), a first rotor disc (26) fixed for rotation with one of the two parts of the transmission element, a second rotor disc (27) fixed for rotation with the other part of the transmission element, and a second stator (28), the first stator being fed by the said hydraulic central station, the first rotor disc having a series of passages (36), the second rotor disc having two series of passages, and the second stator feeding the said hydraulic jack (19), which arrangement is characterised in that the passages (36, 43, 44) of the two rotor discs (26, 27) are cylindrical holes extending from one face of the disc to the other, and in that annular groove means (34, 39, 40) are provided in the faces (35, 38) of the stators (25, 28) adjacent to the said rotor discs (26, 27) and extend opposite the said cylindrical holes (36, 43, 44).

2. An arrangement according to Claim 1, characterised in that the series of passages (36) of the first rotor disc (26) and the two series of passages (43, 44) of the second rotor disc (27) are in all three cases circular series on three different mean radii (R, R1, R2).

3. An arrangement according to Claim 1 or Claim 2, characterised in that an annular groove (34) is provided in that face (35) of the first stator (25) which is adjacent to the first rotor disc (26), this groove being disposed facing the series of cylindrical holes (36) of the first rotor disc (26) and being connected to a pump (18) of the hydraulic central station (17, 18), and in that two concentric annular grooves (39, 40) are provided in that face (38) of the second stator (28) which is adjacent to the second rotor disc (27), are disposed respectively facing the two series of cylindrical holes (43, 44) of the second rotor disc (27), and are respectively connected to two opposite chambers (22, 23) of the hydraulic jack (19).

4. An arrangement according to any of Claims 1 to 3, characterised in that the circular series of passages (36) of the first rotor disc (26) extends on a mean radius (R) intermediate between the mean radii (R1, R2) on which extend the two circular series of passages (43, 44) of the second rotor disc (27).

5. An arrangement according to any of Claims 1 to 4, characterised in that each annular groove (34, 39, 40) provided in a face (35, 38) of a stator (25. 28) adjacent to a rotor disc (26, 27) extends on the same mean radius (R, R1, R2) as that on which extends the circular series of passages which is provided in the rotor disc in question and which is disposed facing the groove in question.

6. An arrangement according to any of the preceding claims, characterised in that the sum of the areas, in sections perpendicular to the axis of the distributor, of the passages of one of the series of passages of the second rotor disc (27) is equal to the sum of the areas, in sections perpendicular to the axis of the distributor, of the passages of the other series of passages of the second rotor disc.

7. An arrangement according to any of the preceding claims, characterised in that the annular groove (34) of the first stator (25) has an area, in an annular section perpendicular to the axis of the distributor (24), which is equal to the sum of the areas, in a section perpendicular to the axis of the distributor, of the cylindrical holes of one of the series of cylindrical holes (43) of the second rotor disc (27), which sum is in turn equal to the sum of the areas, in a section perpendicular to the axis of the distributor, of the cylindrical holes of the other series of cylindrical holes (44) of the second rotor disc (27).

8. An arrangement according to any of the preceding claims, characterised in that the two annular grooves (39, 40) of the second stator (28) have the same area in a section perpendicular to the axis of the distributor (24).

9. An arrangement according to Claim 8, characterised in that the sum of the areas, in a section perpendicular to the axis of the distributor (24), of the cylindrical holes (36) of the first rotor disc (26) is equal to the area, in an annular section perpendicular to the axis of the distributor (24), of each of the two annular grooves (39, 40) of the second stator (28).

10. An arrangement according to any of the preceding claims, characterised in that the passages (36) of the first rotor disc (26) are cylindrical holes of circular section.

11. An arrangement according to any of the preceding claims, characterised in that the passages (43, 44) of the second rotor disc (27) are cylindrical holes of substantially rectangular section with two rectilinear radial sides (T) and two curvilinear circumferential sides (C).

12. An arrangement according to any of the preceding claims, characterised in that the first rotor disc (26) is provided with means for return to a reservoir (17) of the hydraulic central station (17,18), which means are in the form of notches (45, 46) provided in its outer and inner peripheries.

13. An arrangement according to any of the preceding claims, characterised in that the two stators (25, 28) are axially fixed in relation to one another and in that the interfaces between the first stator (25) and the first rotor (26), between the two rotors (26, 27), and between the second rotor (27) and the second stator (28) are in light frictional contact.

14. An arrangement according to Claim 13, characterised in that the axial distance between the two stators is held fixed by means of a spacer (50).

15. An arrangement according to any of the preceding claims, characterised in that each of the two rotor discs (26, 27) is produced by stamping from a flat sheet metal blank.

16. An arrangement according to any of the preceding claims, characterised by means for improving the balancing of pressures, comprising auxiliary holes (60, 61, 62) formed in the rotors (26', 27').

17. An arrangement according to Claim 16, characterised in that the said balancing holes (60, 61, 62) are independent of the hydraulic passages (36', 43', 44') (Figures 11 and 12).

18. An arrangement according to Claim 16, characterised in that the said balancing holes (60, 61, 62) are constituted by the hydraulic passages (36″, 43″, 44″) themselves, which are enlarged for that purpose (Figures 13 and 14).

19. An arrangement according to Claim 1, characterised in that the first stator (25‴), is not only fed by the hydraulic central station (17, 18) but also feeds the hydraulic jack (19), while the second stator (28) not only feeds the hydraulic jack (19) but is also fed by the hydraulic central station (17, 18), the groove means of each of the stators (25‴, 28‴) comprising three concentric grooves (63, 34‴, 64, 39‴, 65, 40‴), while the first rotor (26‴) has not only a series of hydraulic passages (36‴) but also has two other series of hydraulic passages (43‴, 44‴), and the second rotor (27‴) has not only two series of hydraulic passages (43‴, 44‴) but also a third series of hydraulic passages (36‴), each rotor thus having three series of hydraulic passages extending respectively on the same mean radii as the three grooves of each of the stators in such a manner as to achieve symmetrical division into two, which improves pressure balancing conditions (Figures 15 to 18).

20. An arrangement according to Claim 19, characterised in that the hydraulic passages of each of the three series of hydraulic passages of each rotor alternate with slots (66, 67, 68) having widened portions (69) which cooperate with the hydraulic passages of the other rotor for balancing purposes (Figures 15 to 18).

21. An arrangement according to Claim 19 or Claim 20, characterised in that each of the two rotor discs has return means in the form of notches formed in its outer and inner peripheries (45''', 46''') (Figures 15 to 18).

**Ansprüche**

1. Vorrichtung zur Lenkhilfe bei einem Fahrzeug, mit einer Lenkeinrichtung (10), die auf eine Lenkausschlageinrichtung (11) einwirkt, wobei die Lenkeinrichtung ein Übertragungselement aus zwei Teilen (13A, 13B) besitzt, die mit einem begrenzten relativen Winkelspiel vorgesehen sind, das eine Winkelverschiebung zwischen den Teilen unter Wirkung der Lenkeinrichtung ermöglicht, und mit einer Hilfseinrichtung, die abhängig von einer derartigen Winkelverschiebung auf die Lenkausschlageinrichtung in dem gleichen Sinn einwirken kann, wie die Lenkeinrichtung, eine Vorrichtung, bei der die Hilfseinrichtung aufweist eine Hydraulikzentrale (17, 18), ein Hydraulik-Betätigungsglied (19), das auf die Lenkausschlageinrichtung einwirkt, und einen Hydraulik-Verteiler (24) zwischen der Zentrale und dem Betätigungsglied, wobei der Verteiler eine axiale stapelförmige Anordnung aufweist aus einem ersten Stator (25), einem ersten Scheibenrotor (26), der drehfest mit einem der beiden Teile des Übertragungselements verbunden ist, einem zweiten Scheibenrotor (27), der drehfest mit dem anderen Teil des Übertragungselements verbunden ist, und einem zweiten Stator (28), wobei der erste Stator von der Hydraulikzentrale versorgt ist, der erste Scheibenrotor eine Reihe von Durchtritten (36) besitzt, der zweite Scheibenrotor zwei Reihen von Durchtritten besitzt und der zweite Stator das Hydraulik-Betätigungsglied (19) versorgt, eine Vorrichtung, die sich dadurch auszeichnet, daß die Durchtritte (36, 43, 44) der beiden Scheibenrotoren (26, 27) zylindrische Löcher sind, die sich von einer Seite zur anderen des Scheibenrotors erstrecken, und daß ringförmige Nutenelemente (34, 39, 40) in den Seiten (35, 38) der Statoren (25, 28) benachbart zu den Scheibenrotoren (26, 27) vorgesehen sind und sich den zylindrischen Löchern (36, 43, 44) gegenüberliegend erstrecken.

2. Vorrichtung nach Anspruch 1, *dadurch gekennzeichnet,* daß die Reihe der Durchtritte (36) des ersten Scheibenrotors (26) und die beiden Reihen der Durchtritte (43, 44) des zweiten Scheibenrotors (27) alle drei kreisförmig angeordnete Reihen gemäß dreier verschiedener mittlerer Radien (R, R1, R2) sind.

3. Vorrichtung nach Anspruch 1 oder nach Anspruch 2, *dadurch gekennzeichnet,* daß eine Ringnut (34) in der Seite (35) des ersten Stators (25) neben dem ersten Scheibenrotor (26) gebildet ist, der Reihe der zylindrischen Löcher (36) des ersten Scheibenrotors (26) gegenüberliegend angeordnet ist und mit einer Pumpe (18) der Hydraulikzentrale (17, 18) verbunden ist und daß zwei konzentrische Ringnuten (39, 40) in der Seite (38) des zweiten Stators (28) neben dem zweiten Scheibenrotor (27) angebracht sind, jeweils den beiden Reihen der zylindrischen Löcher (43, 44) des zweiten Scheibenrotors (27) gegenüberliegend angeordnet sind und jeweils mit zwei entgegengesetzten Kammern (22, 23) des Hydraulik-Betätigungsglieds (19) verbunden sind.

4. Vorrichtung nach einem der Ansprüche 1 bis 3, *dadurch gekennzeichnet,* daß die kreisförmige Reihe der Durchtritte (36) des ersten Scheibenrotors (26) sich entsprechend einem mittleren Zwischenradius (R) erstreckt, der zwischen den mittleren Radien (R1, R2) liegt, gemäß denen sich die beiden kreisförmigen Reihen der Durchtritte (43, 44) des zweiten Scheibenrotors (27) erstrecken.

5. Vorrichtung nach einem der Ansprüche 1 bis 4, *dadurch gekennzeichnet,* daß jede Ringnut (34, 39, 40), die in einer Seite (35, 38) eines Stators (25, 28) neben einem Scheibenrotor (26, 27) angebracht ist, sich gemäß dem gleichen mittleren Radius (R, R1, R2) erstreckt, wie derjenige, mit dem sich die kreisförmige Reihe der Durchtritte des Scheibenrotors erstreckt, der der jeweiligen Nut gegenüberliegt.

6. Vorrichtung nach einem der vorstehenden Ansprüche, *dadurch gekennzeichnet,* daß die Flächensumme gemäß zur Achse des Verteilers senkrechten Schnitten der Durchtritte einer der Reihe der Durchtritte des zweiten Scheibenrotors (27) gleich der Flächensumme gemäß zur Achse des Verteilers senkrechten Schnitten der Durchtritte der anderen Reihe der Durchtritte des zweiten Scheibenrotors ist.

7. Vorrichtung nach einem der vorhergehenden Ansprüche, *dadurch gekennzeichnet,* daß die Ringnut (34) des ersten Stators (25) eine Fläche gemäß einem zur Achse des Verteilers (24) senkrechten ringförmigen Schnitt besitzt, die gleich der Flächensumme gemäß einem zur Achse des Verteilers senkrechten Schnittes der zylindrischen Löcher (43) des zweiten Scheibenrotors (27) ist, die wiederum der Flächensumme gemäß einem zur Achse des Verteilers senkrechten Schnitts der zylindrischen Löcher der anderen Reihe der zylindrischen Löcher (44) des zweiten Scheibenrotors (27) gleich ist.

8. Vorrichtung nach einem der vorhergehenden Ansprüche, *dadurch gekennzeichnet,* daß die zwei Ringnuten (39, 40) des zweiten Rotors (28) die gleiche Fläche gemäß einem zur Achse des Verteilers (24) senkrechten Schnitts besitzen.

9. Vorrichtung nach Anspruch 8, *dadurch gekennzeichnet,* daß die Flächensumme gemäß einem zur Achse des Verteilers (24) senkrechten Schnittes der zylindrischen Löcher (36) des ersten Scheibenrotors (26) gleich der Fläche gemäß einem zur Achse des Verteilers (24) senkrechten ringförmigen Schnitt jedes der beiden Ringnuten (39, 40) des zweiten Stators (28) ist.

10. Vorrichtung nach einem der vorhergehenden Ansprüche, *dadurch gekennzeichnet*, daß die Durchtritte (36) des ersten Scheibenrotors (26) zylindrische Löcher mit Kreisquerschnitt sind.

11. Vorrichtung nach einem der vorhergehenden Ansprüche, *dadurch gekennzeichnet*, daß die Durchtritte (43, 44) des zweiten Scheibenrotors (27) zylindrische Löcher mit im wesentlichen Rechteckquerschnitt sind, mit zwei geradlinigen radialen Seiten (T) und zwei gebogenen Umfangsseiten (C).

12. Vorrichtung nach einem der vorhergehenden Ansprüche, *dadurch gekennzeichnet*, daß der erste Scheibenrotor (26) eine Rückführeinrichtung zu einem Behälter (17) der Hydraulikzentrale (17, 18) in Form von Einkerbungen (45, 46) aufweist, die in dessen äußerem und inneren Umfang angebracht sind.

13. Vorrichtung nach einem der vorhergehenden Ansprüche, *dadurch gekennzeichnet*, daß die beiden Statoren (25, 28) gegeneinander axial fest sind und daß die Übergänge zwischen Stator (25) und Rotor (26), zwischen den beiden Rotoren (26, 27) und zwischen dem zweiten Rotor (27) und dem zweiten Stator (28) mit leichter Reibung vorgesehen sind.

14. Vorrichtung nach Anspruch 13, *dadurch gekennzeichnet*, daß der axiale Abstand zwischen den beiden Statoren mittels eines Abstandrings (50) festgelegt ist.

15. Vorrichtung nach einem der vorhergehenden Ansprüche, *dadurch gekennzeichnet*, daß jeder der beiden Rotoren (26, 27) durch eine Lochstanze ausgehend von einem flachen Blechzuschnitt gebildet ist.

16. Vorrichtung nach einem der vorhergehenden Ansprüche, *gekennzeichnet durch* Mittel zur Verbesserung des Ausgleiches von Drücken, die durch Hilfslöcher (60, 61, 62) gebildet sind, die in den Rotoren (26', 27') angebracht sind.

17. Vorrichtung nach Anspruch 16, *dadurch gekennzeichnet*, daß die Ausgleichslöcher (60, 61, 62) unabhängig von den Hydraulik-Durchtritten (36', 43', 44') sind (Figuren 11 und 12).

18. Vorrichtung nach Anspruch 16, *dadurch gekennzeichnet*, daß die Ausgleichslöcher (60, 61, 62) durch die Hydraulik-Durchtritte (36", 43", 44") selbst gebildet sind, die zu diesem Zweck vergrößert sind (Figuren 13 und 14).

19. Vorrichtung nach Anspruch 1, *dadurch gekennzeichnet*, daß der erste Stator (25''') nicht nur von der Hydraulikzentrale (17, 18) versorgt ist, sondern auch das Hydraulik-Betätigungsglied (19) versorgt, während der zweite Stator (28) nicht nur das Hydraulik-Betätigungsglied (19) versorgt, sondern auch von der Hydraulikzentrale (17, 18) versorgt ist, wobei die Nuteneinrichtung jedes der Statoren (25''', 28''') drei konzentrische Nuten (63, 34''', 64, 39''', 65, 40''') aufweist, wobei der erste Rotor (26''') nicht nur eine Reihe von Hydraulik-Durchtritten (36''') sondern auch zwei weitere Reihen von Hydraulik-Durchtritten (43''', 44''') besitzt, wobei der zweite Rotor (27'') nicht nur zwei Reihen von Hydraulik-Durchtritten (43''', 44''') sondern auch eine dritte Reihe von Hydraulik-Durchtritten (36''') besitzt, wobei jeder Rotor auf diese Weise drei Reihen von Hydraulik-Durchtritten aufweist, die sich jeweils gemäß gleichen mittleren Radien erstrecken, wie die drei Nuten jedes der Statoren derart, daß eine symmetrische Verdopplung erreicht ist, die die Ausgleichsbedingungen der Drücke verbessert (Figuren 15 bis 18).

20. Vorrichtung nach Anspruch 19, *dadurch gekennzeichnet*, daß die Hydraulik-Durchtritte von jedem der drei Reihen der Hydraulik-Durchtritte jedes Rotors sich abwechseln mit Schlitzen (66, 67, 68), die vergrößerte Teile (69) aufweisen, die mit den Hydraulik-Durchtritten des anderen Rotors zum Zwecke des Ausgleichs zusammenwirken (Figuren 15 bis 18).

21. Vorrichtung nach Anspruch 19 oder nach Anspruch 20, *dadurch gekennzeichnet*, daß jeder der beiden Scheibenrotoren Rückführmittel in Form von Einkerbungen (45''', 46''') aufweist, die in ihren äußeren und inneren Umfängen vorgesehen sind (Figuren 15 bis 18).

FIG.1

FIG.2

FIG.3

FIG.4    FIG.5    FIG.6    FIG.7

FIG.8    FIG.9    FIG.10

0 004 212

4/6

FIG. 14

FIG. 13

FIG. 12

FIG. 11

FIG. 18

FIG. 17

FIG. 16

FIG.15